# EUROPEAN PATENT SPECIFICATION

(11) **EP 2 093 362 B1**
(45) Date of publication and mention of the grant of the patent: **15.08.2012**
(21) Application number: 09075052.2
(22) Date of filing: 05.02.2009
(51) Int. Cl.: E05D 5/02, F16B 13/00

(54) **Method and clamping system for the fixation of a hinge or other metal work on profiles for windows and doors**
Verfahren und Klemmsystem zur Befestigung eines Scharniers oder anderen Beschlags an Profilen für Fenster und Türen
Procédé et système de fixation pour une charnière ou autre ferrure sur les profils pour fenêtres et portes

(30) Priority: 20.02.2008 BE 200800098
(43) Date of publication of application: 26.08.2009
(73) Proprietor: Van Parys, Remi Emiel, 8790 Waregem (BE)
(72) Inventor: Van Parys, Remi Emiel, 8790 Waregem (BE)
(74) Representative: Donné, Eddy

(56) References cited:
- EP-A- 0 528 213
- EP-A- 1 258 584
- DE-A1- 2 317 880
- DE-U1-202006 008 327
- DE-U1-202006 010 207
- GB-A- 2 297 595
- US-B1- 6 406 233

## Description

The present invention concerns a method and a clamping system for fixing hinges and other metal work to window or door profiles.

In particular, the invention concerns such a method and a clamping system that can be applied to hollow profiles such as aluminium profiles that are usually hollow.

It is known that windows and doors usually have a fixed frame and one or several swivelling leaves or doors.

In the case of aluminium embodiments, the challenge regarding the thermal insulation was taken on by dividing the aluminium profiles of the fixed frame as well as of the swivelling windows and doors in each time an inner profile and an outer profile, and by mutually connecting these parts by means of a plastic connecting piece, usually called the strip.

In practice, such a strip usually consists of two plastic laths with side edges that are specifically profiled as teeth or grooves co-operating in a fitting manner with grooves and teeth provided on the inner profile and the outer profile corresponding to the latter.

The cavity that is defined by the inner profile and the outer profile on the one hand, and by the two plastic laths on the other hand, are often provided with foam at present in order to promote the insulating characteristics of the assembly.

As a result, however, it becomes impossible to provide tightening elements to fix the hinges which can be pushed inside said space, which are usually inserted via an open end of the profile and pushed through into the desired place.

Such tightening elements are mainly formed of a solid element in which is provided a tapped hole for clamping a bolt which can be inserted through a bore hole in the profile. In order to be able to push the latter in a controlled manner through a profile, they are often provided with resilient lips.

This restriction is particularly problematic in the case of hinges with a concealed attachment. For, such hinges with a concealed attachment are fixed to the sides of the profiles that are usually not visible in the closed position.

Since said sides have a centrally situated plastic lath which is made constantly wider and thus becomes increasingly less stable because of the required insulation characteristics, and since push-in tightening elements can be no longer used when said cavity is filled with foam, a problem arises related to the fixing of the hinges.

Indeed, the increasing width of the plastic lath results in a narrower outer profile in which there is no more space available for a tapped hole in which could be provided a bolt along the concealed side, usually directed mainly crosswise to the visible outside.

Only the inner profile still offers the possibility to provide a push-in tightening element, but for a rigid fastening the screws must be provided at a sufficiently spaced distance, preferably not too far from the line of force.

If the hinge pin is provided near the outer profile, in other words when an outward turning leaf or door is concerned, such a fastening to the inner profile will certainly not be sufficient given the too large distance between the connection and the line of force.

Moreover, it should be noted that the need and demand for heavier windows and in particular heavier doors increases, which is contradictory to the decreasing possibilities and restricted stability for the fastening of the hinges.

The invention aims to provide a solution to the above-described challenge and to remedy the problems that occur at present and that are related to the mounting of metal work in general and hinges for window leaves and doors in particular.

To this end, the invention concerns a method according to claim 6.

If the door or window profiles comprise an outer profile, an inner profile and a strip as discussed, then the openings and also the clamping system can be provided in each of these sub profiles or parts.

This method is advantageous in that an opening can be provided in a zone of the profile near or only partly through an inner rib or another reinforced zone inside the profile, such that the rigidity which is offered by such a rib or another reinforced zone is not or only partly undermined.

In other words, by providing such an opening, the structural rigidity of the profile is predominantly maintained, after which the structural rigidity is specifically looked for by the aforesaid lateral movement or toppling of at least a part of the clamping system.

Moreover, such an opening can be easily provided since it specifically avoids the reinforced zone.

According to the method, the clamping system comprises at least a bolt and a cam, which are both inserted at least partly through the aforesaid opening in the profile. The cam is moved and/or tilted crosswise to the feeding direction, for example during the insertion or as a separate action, possibly while screwing down the bolt, such that the moved and/or tilted cam reaches up against a rib or another reinforced zone of the profile.

The cam, is clamped against the rib up to which it reaches by screwing down the bolt in an appropriate manner.

According to another special variant of the method, the cam is not only moved and/or tilted up against and behind the rib as described above, but the design of the rib is such that, seen as of the position of an introduced cam before this cam is moved and/or tilted as described above, it has a concealed part between the rib and the wall of the profile, and whereby the cam is adjusted to the design of the rib in such a way that the cam is at least partly moved and/or tilted between the rib and the wall of the profile.

This provides additional rigidity to the cam and thus to the mounting of the hinge or the like in the direction perpendicular to the feeding direction of the cam, namely to absorb forces that are directed away from the rib.

The present invention also concerns a clamping system according to claim 1.

The advantages are in accordance with the method according to the invention.

Document GB 2.297.595, which discloses the features of the preamble of claim 1, reveals a clamping system comprising a bolt and a bush. The bush is mainly formed of two parts which are complementary and together form a bush with thread to work in conjunction with the bolt.

The invention also concerns a profile for a door or window frame according to claim 14.

In order to better explain the characteristics of the invention, the following preferred embodiments of a clamping system for fixing hinges to window or door profiles are described by way of example only, with reference to the accompanying drawings, in which:
figure 1 schematically represents a fixed door frame profile and a swivelling door, seen as a section;
figure 2 represents the door frame profile indicated by arrow F2 in figure 1, seen in perspective;
figure 3 represents the parts indicated by arrow F3 in figure 2 to a larger scale;
figure 4 is a disassembled view of the parts in figure 3;
figures 8 and 9 show a variant embodiment of a clamping system according to the invention;
figures 10 and 11 show another variant embodiment of a clamping system according to the invention;

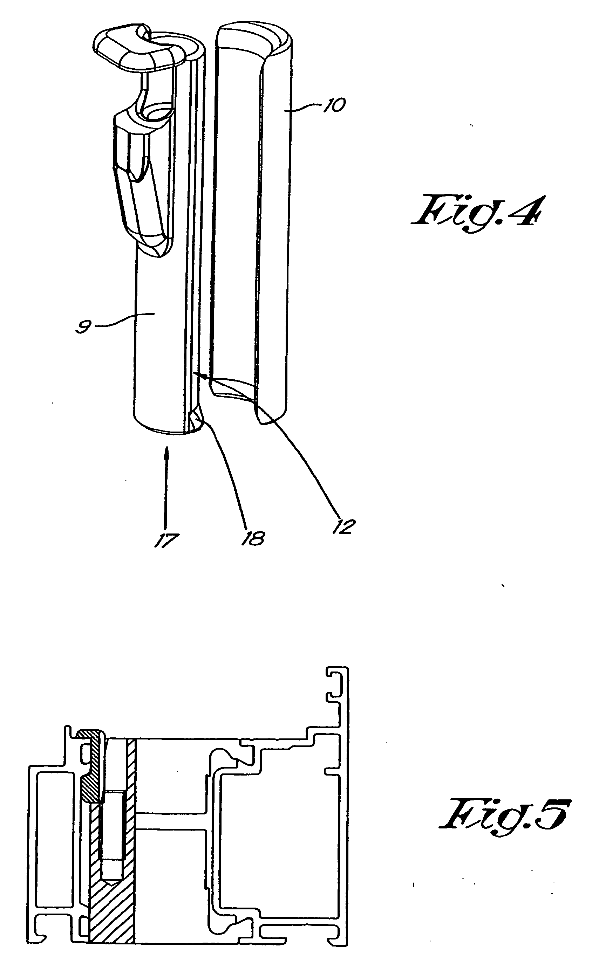

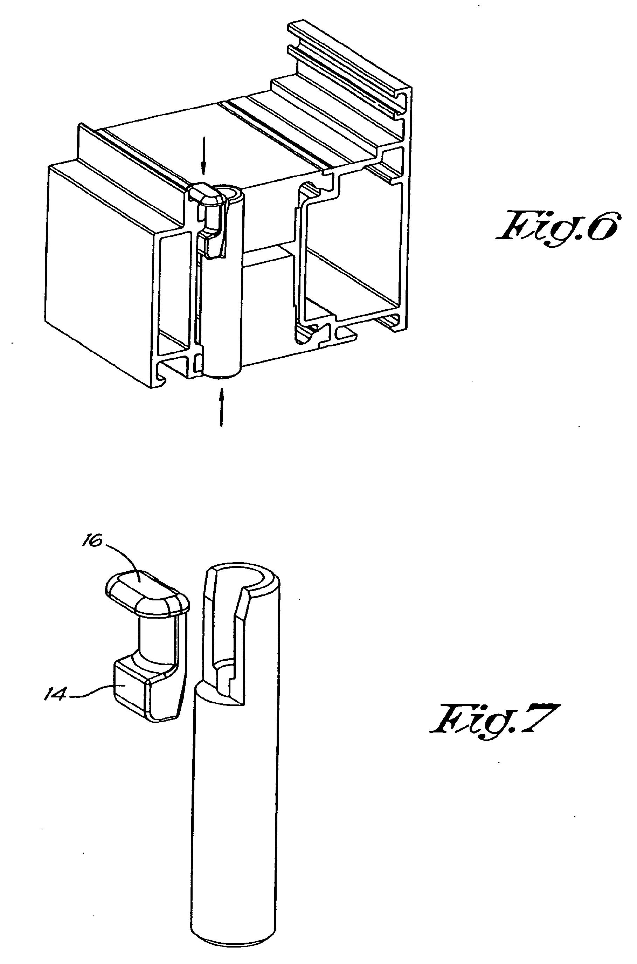

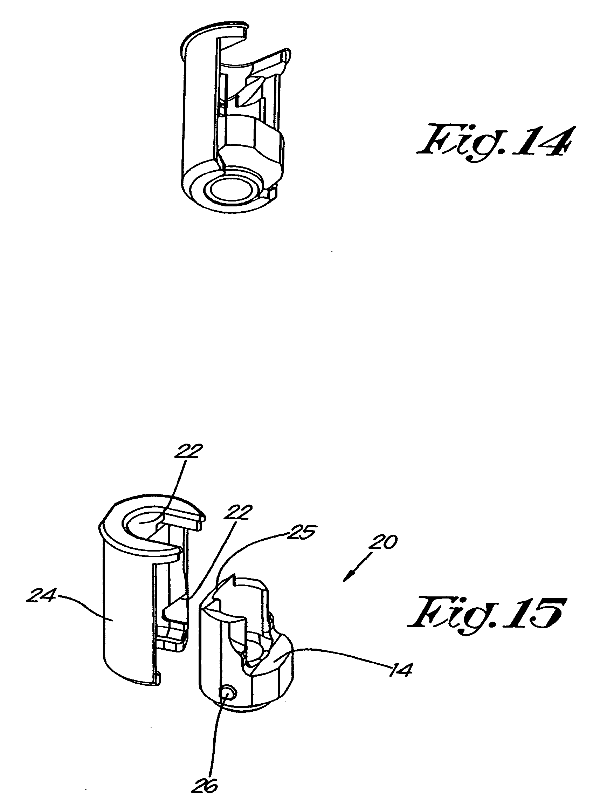

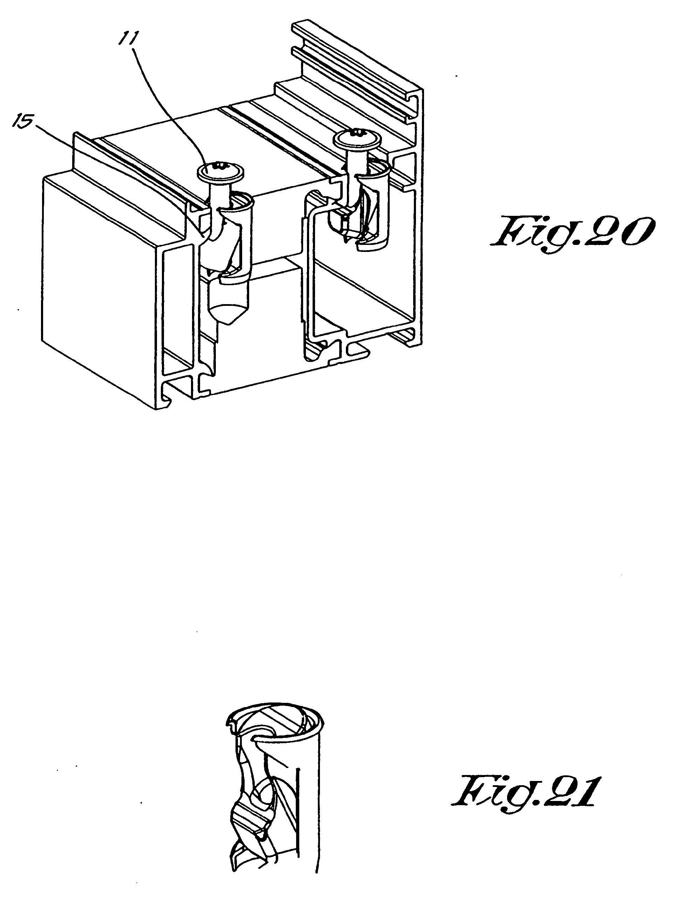

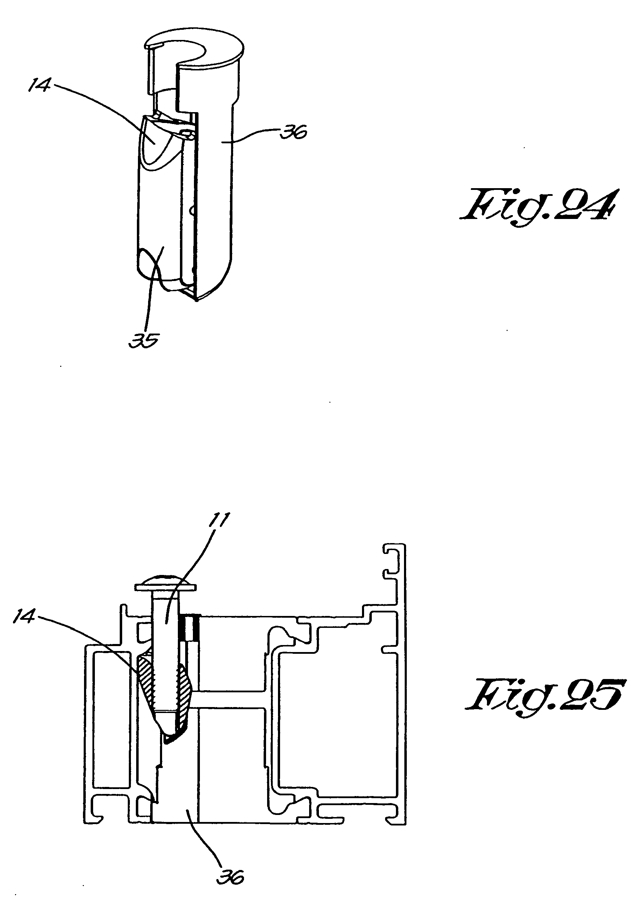

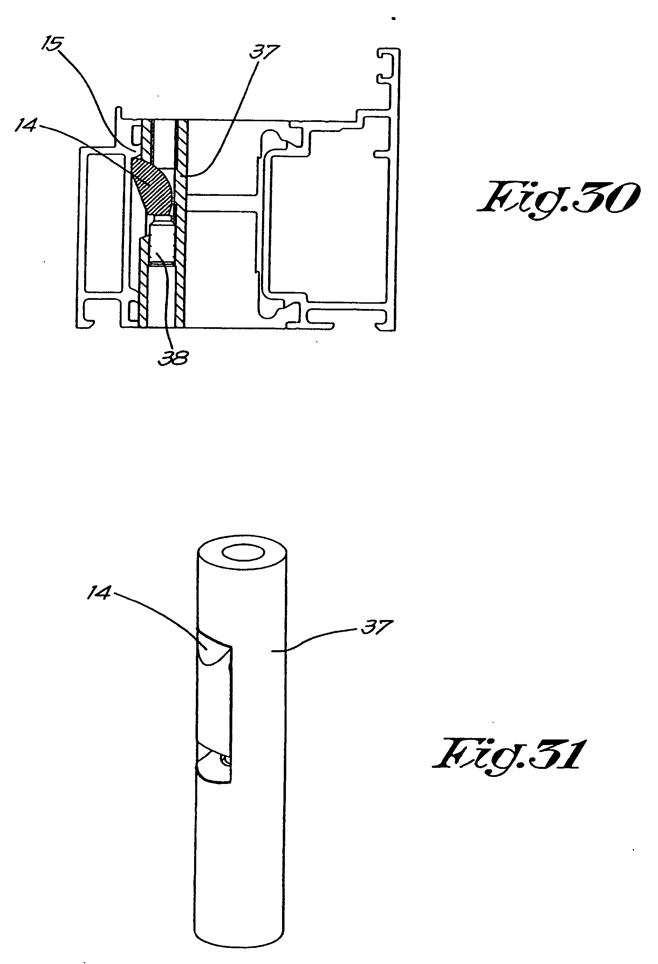

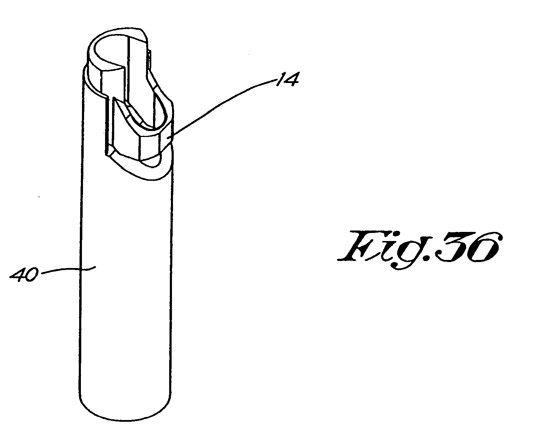

figures 5 to 7 and 12 to 36 show different embodiments of a clamping system which are not within the scope of the invention.

A first fixing plate 4 of the hinge 3 is provided on the fixed door frame profile 1, and the other fixing plate 4 is provided on the door profile 2, here in both cases on the side of the door frame profile 1 which is concealed in the closed position and the door profile 2.

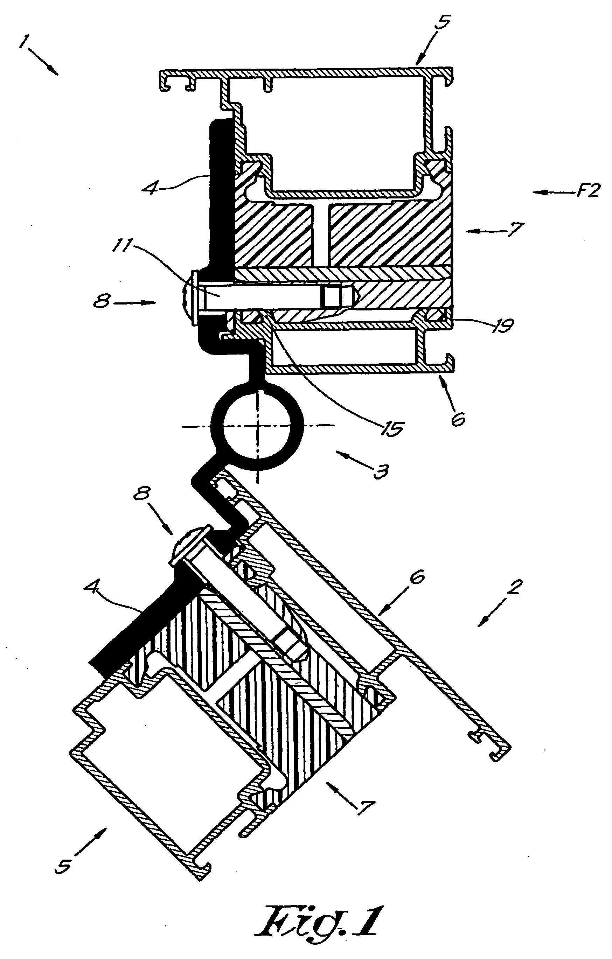

The fastenings concerned are realised by means of clamping systems 8 according to the invention, of which each time one element is represented in figure 1.

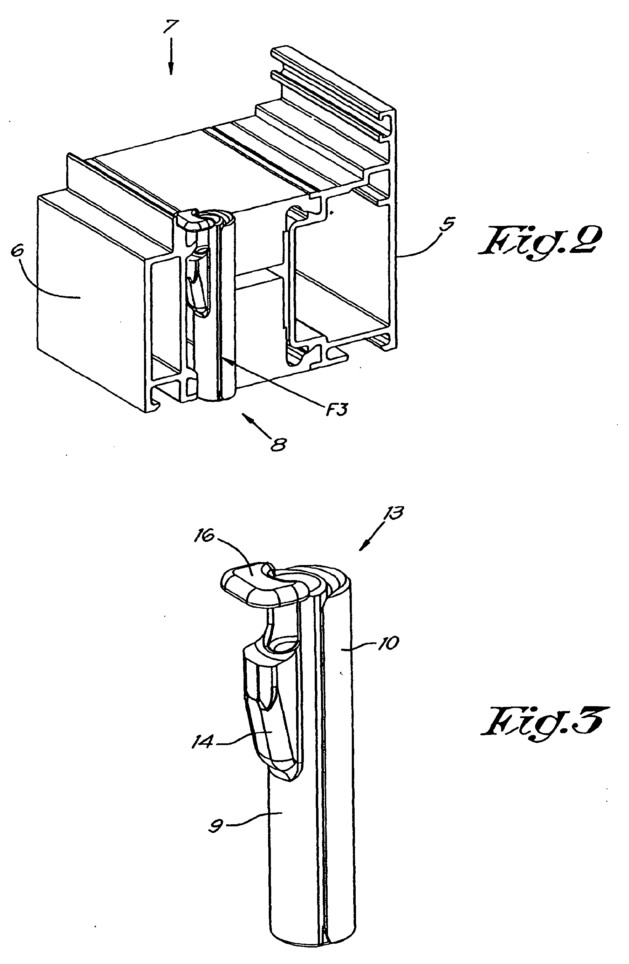

Figures 2 to 4 represent the characteristics of said clamping system 8 in more detail, as well as its working.

In this embodiment, the clamping system 8 according to the invention consists of a half-open bush 9 with special characteristics, a tailpiece 10 for said half-open bush 9 and a bolt 11 which can work in conjunction with the half-open bush 9 and the tailpiece 10 as a whole.

The half-open bush 9 and the tailpiece 10 are complementary and together form, in an appropriate arrangement, a fully fledged bush which serves as a plug and which is provided with internal thread to work in conjunction with the bolt 11.

The half-open bush 9 has an open jacket part 12 on one side and only occupies, seen as of the crosscut far end 13, a part of the predominantly round outer perimeter of the entire bush when including the tailpiece 10.

On the side opposite the removed or open jacket part 12, and at a distance from the free end 13, the half-open bush 9 comprises a cam 14 whose shape and dimensions are adapted to the shape and dimensions of a rib 15 provided on the inside of the profile onto which the clamping system 8 is provided.

Seen from the crosscut far end 13, the cam 14 then assumes a total section, together with the section of the half-open bush 9, which does not deviate significantly from the section of the total bush at the height where the cam 14 is not present.

At its free end 13, in particular on the side opposite the removed or open jacket part 12, the half-open bush 9 also comprises a lip 16.

At the other free end 17, the half-open bush 9 is provided with a widened foot 18.

The mounting and the working of the clamping system 8 according to the invention is simple and as follows.

As represented in figures 2 to 4, the outer profile 6 of the fixed door frame profile 1 is provided with an inner rib 15, in particular near the strip 7 and near the side which is concealed in the closed position of the door profile 2.

At a distance from the centre line of said rib 15, the fixed door frame profile 1 is provided with an opening 19, for example via the concealed side, in this case a round bore hole 19 which is mainly provided in the strip 7 in this case and possibly partly in the outer profile 6.

Via the obtained opening 19, the half-open bush 9 is inserted first. This half-open bush 9 with cam 14 fits exactly in the latter, since the size of the opening 19 is adjusted to the total section of the bush at the height where there is no cam 14, i.e. the half-open bush 9 and the complementary tailpiece 10, which section does not deviate significantly from the section of the cam 14 and the half-open bush 9 at the height of the cam 14.

When the half-open bush 9 has been almost entirely inserted, it is laterally moved by manipulating the lip 16, such that the cam 14, seen as of the direction from where the half-open bush 9 is inserted in the opening 19, is moved at least partly behind an inner part of the rib 15.

Next, the complementary tailpiece 10 is led into the opening 19. Thanks to the aforesaid movement, there is sufficient room for it.

When the tailpiece 10 has been entirely inserted, in other words when it reaches up against the widened foot 18 of the half-open bush 9, the bolt 11 is led through an opening in the fixing plate 4 of the hinge 3, and further in the bush formed by the half-open bush 9 and the tailpiece 10.

By subsequently tightening said bolt 11, the half-open bush 9 is drawn upward whereby the cam 14 is clamped against the inner rib 15.

As a result, the fixing plate 4 is firmly connected to the frame profile 1, whereby use is made of the reinforced line offered by the rib 15.

In this embodiment, the bore hole has been provided all through the opposite wall, opposite the concealed side of the fixed door frame profile 1. This offers an additional advantage in that the bush can thereby be provided in a particularly stable manner.

As the bore hole extends entirely through the strip 7, the clamping system 8 can be fixed in a very rigid manner in the profile 1,2 as the clamping system 8, in this way, makes use of the rigidity of the profile 1,2.

As a result, the hinge 3 which is fixed to the profile 1,2 behaves very rigidly, which is a major advantage as windows and doors are constantly being made heavier.

A clamping system 8 according to the invention makes it possible to connect a hinge or other metal work in a very rigid manner to a window or door profile as, in a preferred embodiment, the clamping system makes use of the rigidity of the profile as it extends through two opposite walls of the hollow profile or as it is situated in a bore hole through one or several strips provided in the profile.

Figures 5 to 7 illustrate a first variant of the above-described embodiment, which does not form part of the invention and is mainly different in that the cam 14 is made as an independent element, but also provided with the lip 16 in order to manipulate its positioning, and in that the bush is inserted as a whole, via the opposite wall, opposite the concealed side of the fixed door frame profile 1.

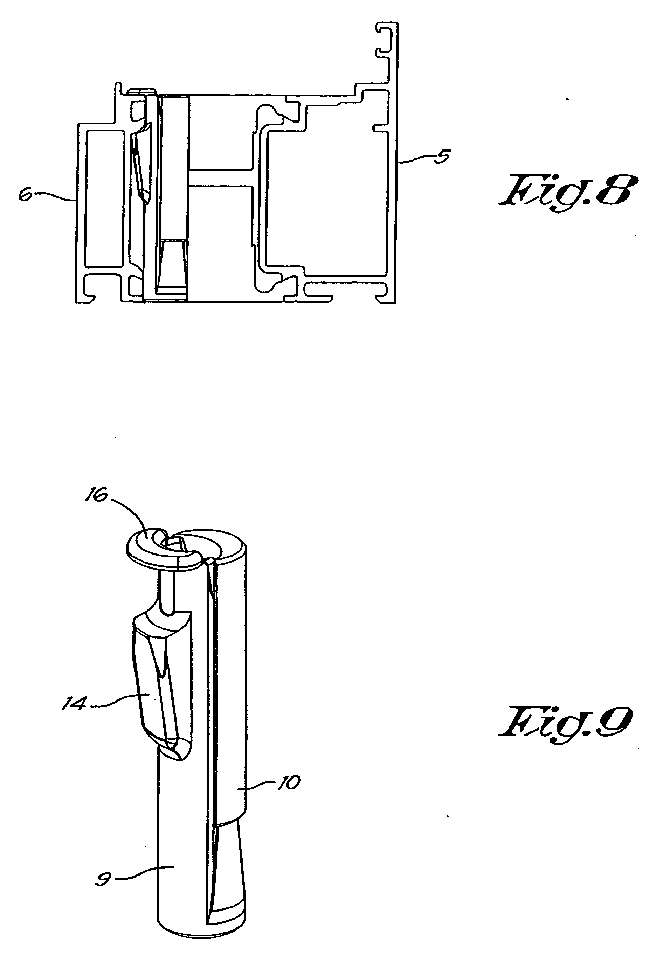

The embodiment as described in figures 8 and 9 is different from the preferred embodiment as discussed and as represented in figures 1 to 4, in that the half-open bush 9 is made such that it can be inserted in the opening 19 in a somewhat tilted manner. Once inserted, it can be tilted in its position and the tailpiece 10 can be introduced.

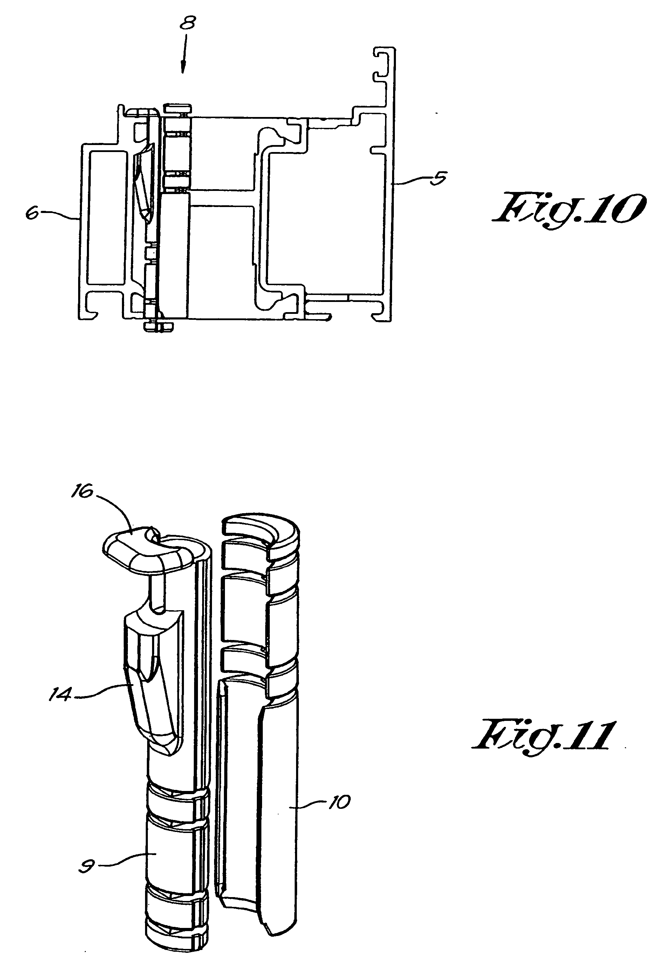

In the variant as represented in figures 10 and 11, the bush parts are provided with fracture zones.

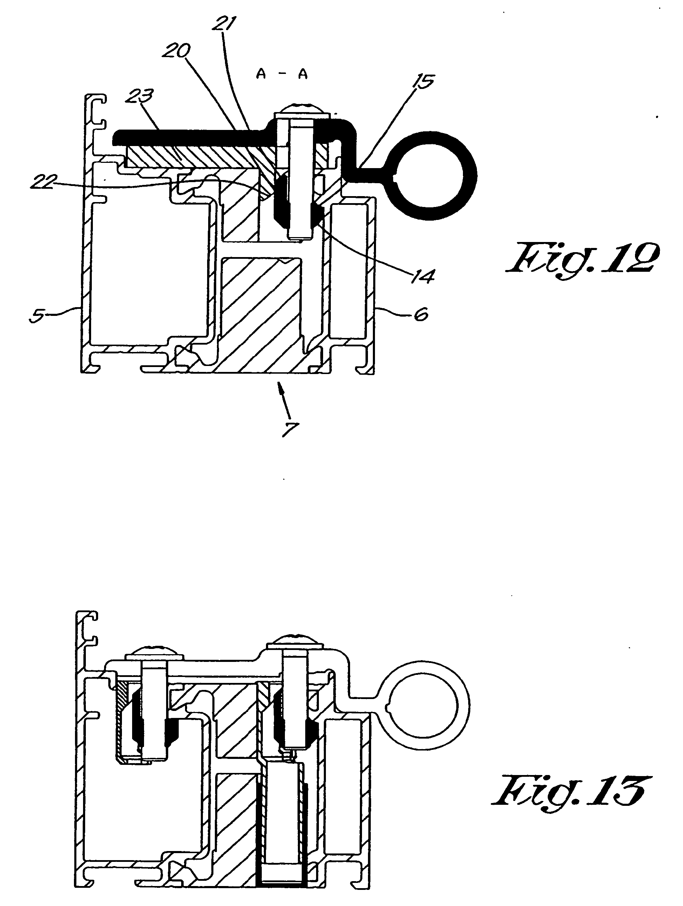

According to another embodiment which does not form a part of the invention, as represented in figure 12, the half-open bush 9 as discussed above is replaced by a bush 20 which is provided with internal thread which can work in conjunction with the bolt 11.

The sleeve 20 is provided with a rounded and/or slanting outer wall part 21 on a first side, and with a cam 14 on the other side whose shape and dimensions are adjusted to the shape and dimensions of a rib 15 provided on the inside of the profile onto which the clamping system 8 is provided.

The clamping system 8 according to this embodiment is also provided with a stop 22 to be inserted in the opening or bore hole 19, directed slantingly in relation to the feeding direction, provided in this case on a plate part which is to be placed between the fixing plate 4 of the hinge 3 and the fixed door frame profile.

The mounting and the working of this clamping system 8 according to the invention is simple and as follows.

First, the mounting is done in accordance with the above-described mounting steps, but the opening 19 must be made sufficiently large or somewhat slot-shaped in this case.

Indeed, the bolt 11 is led through an opening in the fixing plate 4 of the hinge 3 and through an opening in the plate part 23, and also already partly through the sleeve 20.

The bolt 11 is made sufficiently long, such that the sleeve 20 can be provided in the extension of the slanting stop 22, such that the sleeve 20, the bolt 11 and the stop 22 can be led in the opening 19.

One must reckon with the orientation of the sleeve 20, which must be directed towards the stop 22 with its rounded and/or slanting outer wall part 21 and with the cam 14 towards the rib 15.

One and other has for a result that, when screwing down the bolt 11, the sleeve 20 is moved in the direction of the stop 22, and when the rounded and/or slanting outer wall part 21 makes contact with the stop 22, the sleeve 20 and the bolt 11 will be laterally moved, such that the cam 14 is moved up against the rib 15 and is clamped against the latter while the bolt 11 is being screwed further down.

Figures 13 to 16 represent two variant embodiments which do not form part of the invention and differ from the embodiment described above and represented in figure 12 in that the stop 22 is integrated in a bush 24, either in a short variant or a long variant, whereby the latter offers the advantage that it can reach up to a stable part in the profile.

The sleeve 20 can be realised in all sorts of shapes in order to obtain that, when it works in conjunction with the bush 24, it will be laterally moved at a certain stage while the bolt 11 is being screwed down.

This is obtained in this case thanks to the co-operation between a slanting wall part 25 and two lateral protrusions 26 which all work in conjunction with an accompanying stop 22 provided in the bush 24.

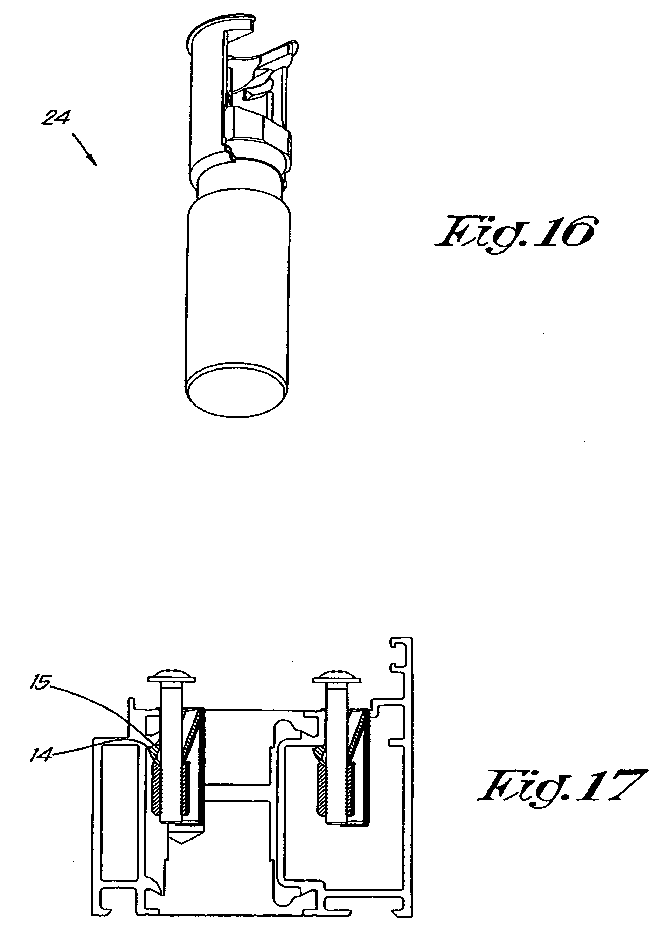

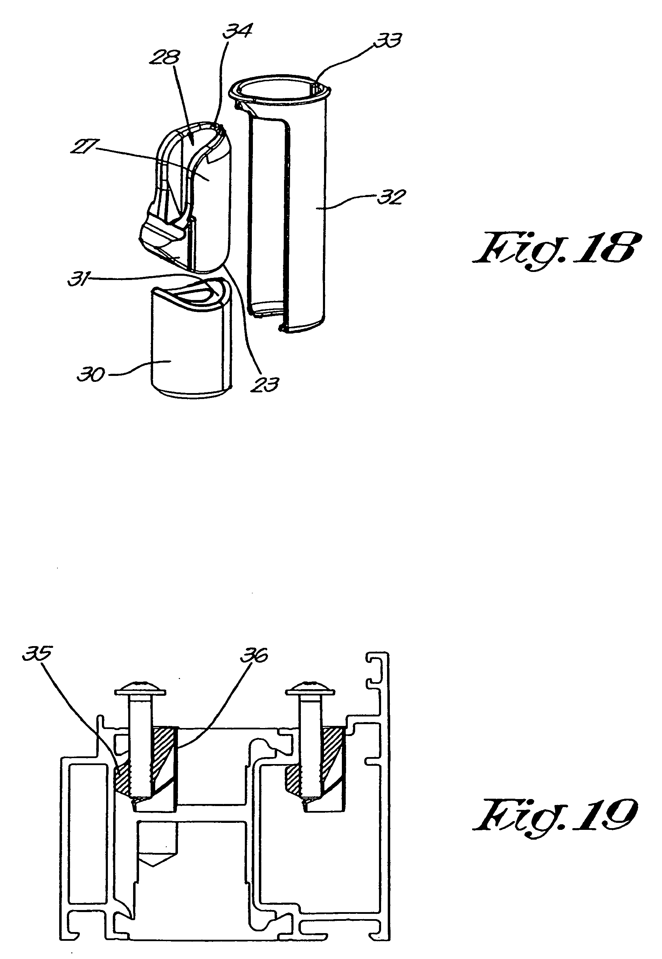

In the embodiment represented in figures 17 and 18 which does not form part of the invention, the clamping system comprises a cam 14 in the shape of a specifically formed sleeve 27 provided with a passage 28 without any internal thread through which the bolt 11 can be freely led.

This passage 28 has an appropriate shape which makes it possible for the sleeve 27 to tilt in a certain direction crosswise to the longitudinal direction of the bolt 11.

Near the passage 28, the sleeve 27 has a round external wall part 29 which can work in conjunction with a nut 30 provided with a concave crosscut side 31, such that when the sleeve 27 with the round wall part 29 is directed towards the free wire end of the bolt 11, and the nut 30 with the concave crosscut side 31 is directed towards the sleeve 27, the sleeve 27 will be tilted when screwing down the bolt 11.

To this end, the sleeve 27 is provided in a half-open bush 32 in which is provided a stop 33 against which the sleeve 27 hits at a tilting point 34 provided to that end, such that the sleeve 27 tilts when there is a further upward movement.

On the side opposite the tilting point 34, the sleeve 27 is provided with a suitably formed cam 14 to co-operate with the rib 15 as described in the preceding embodiments.

It is clear that various forms may lead to the same result.

The stop 33 may for example also be provided on the profile or the hinge.

In the embodiment as represented in figures 19 to 21 which does not form part of the invention, the clamping system 8 consists of a tilting nut 35 having a specific external design, a bush 36 with a partly open wall and a bolt 11. The tilting nut 35 is provided with a passage 37 which is aligned with the feeding direction of the clamping system 8 as soon as the tilting nut 35 has been entirely led in the bush 36.

The tilting nut 35 has a cam 14 with a design as described above, in view of the aimed contact with the rib 15.

The tilting nut 35 and the bush 36 have external and internal designs respectively which are adjusted to one another in such a way that introducing the tilting nut 35 in the bush 36 or leading it further through the latter automatically results in a toppling of the latter.

The mounting and working of this clamping system 8 according to the invention is simple and as follows.

The opening 19 can be provided as described above.

The bush 36 with the tilting nut 35, provided in the latter in such a way that it does not reach outside the jacket through the partly open wall of the bush 36, is inserted in the opening 19 in the door frame profile 1.

When the bush 36 has been entirely led in, the tilting nut 35 can be entirely inserted in the bush 36, whereby the latter will automatically tilt and will be tilted and/or shifted through the partly open wall of the bush 36 with its concealed far end until the passage 37 with internal thread comes in line with the feeding direction.

Next, the bolt 11 is provided and its being screwed down ensures that the cam 14 provided on the special tilting nut 35 is clamped against the rib 15.

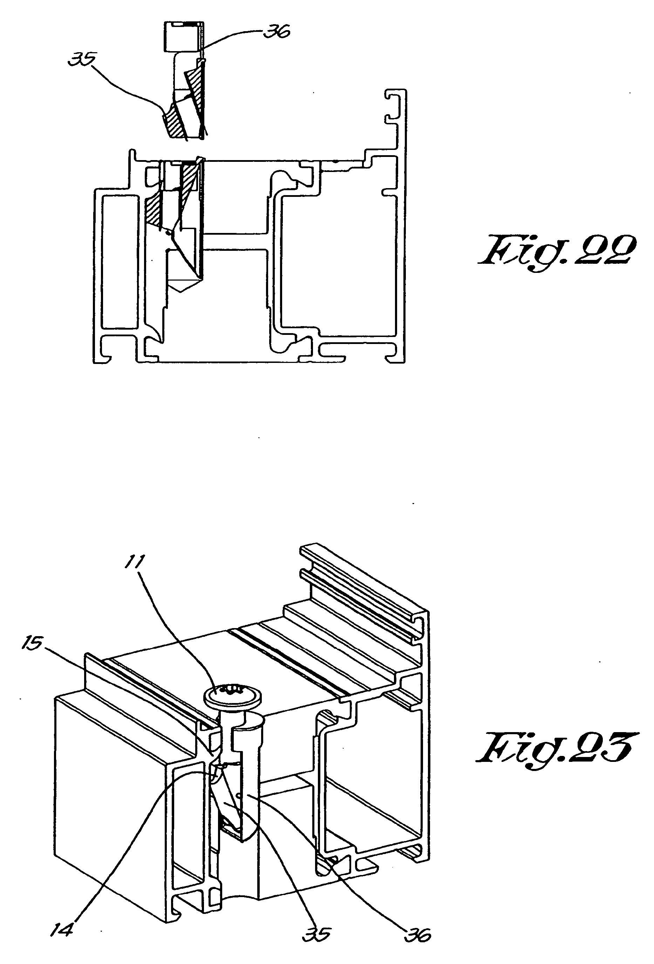

According to a variant embodiment as represented in figure 22 which does not form part of the invention, the tilting nut 35 may be provided with a protrusion which makes contact with a stop in the door frame profile 1 as of a certain position, such that the tilting nut 35 is tilted and/or moved in a single movement while the bush 36 is being inserted with the tilting nut 35.

In the embodiment as represented in figures 23 to 25 which does not form part of the invention, the tilting nut 35 is tilted by inserting the bolt 11. To this end, the tilting nut 35 is provided with an appropriate crosscut side which is directed slantingly in relation to the introduction line of the bolt 11 when the tilting nut 35 is directed in the bush 36. When introducing the bolt 11, the tilting nut 35 is tilted such that the cam 14 is tilted in the direction of the rib 15. By screwing down the bolt 11, the tilting nut 35 is moved further in the direction of the rib 15 and clamped against the latter.

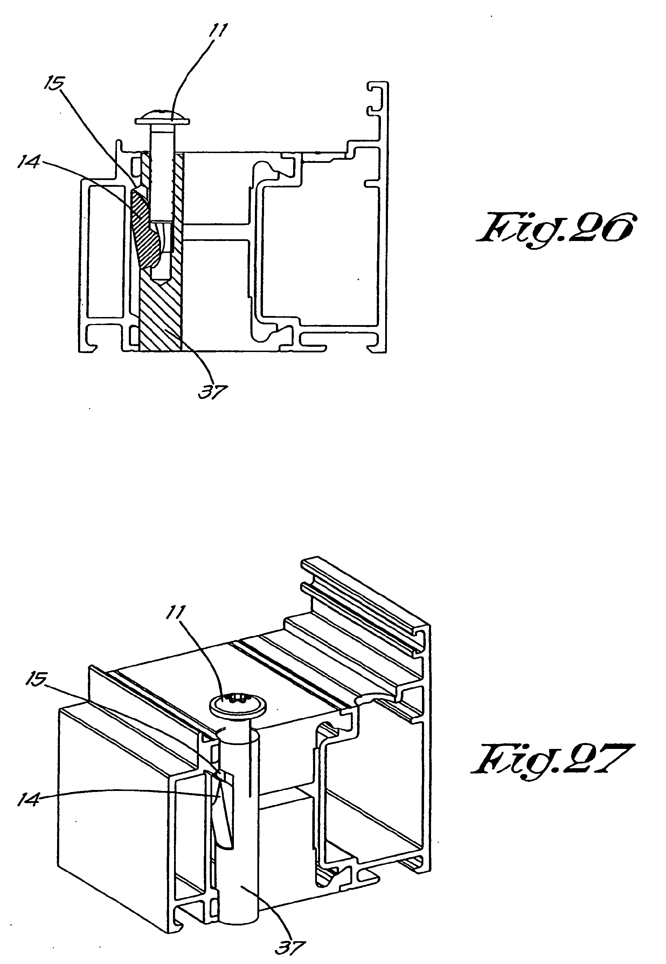

Figures 26 to 28 represent a variant embodiment which does not form part of the invention, whereby the cam 14 is provided in a tilting manner but does not have the shape of a tilting nut.

In this embodiment, the bush 37 is threaded and, by screwing down the bolt 11, the bush 37 is tightened and hence also the tilting cam 14.

The cam 14 is tilted as a result of and during the introduction of the bolt 11, and to that end the cam 14 is provided with an appropriate crosscut side which is directed slantingly in relation to the introduction line of the bolt 11 when the tilting cam 14 has been arranged in the bush 37.

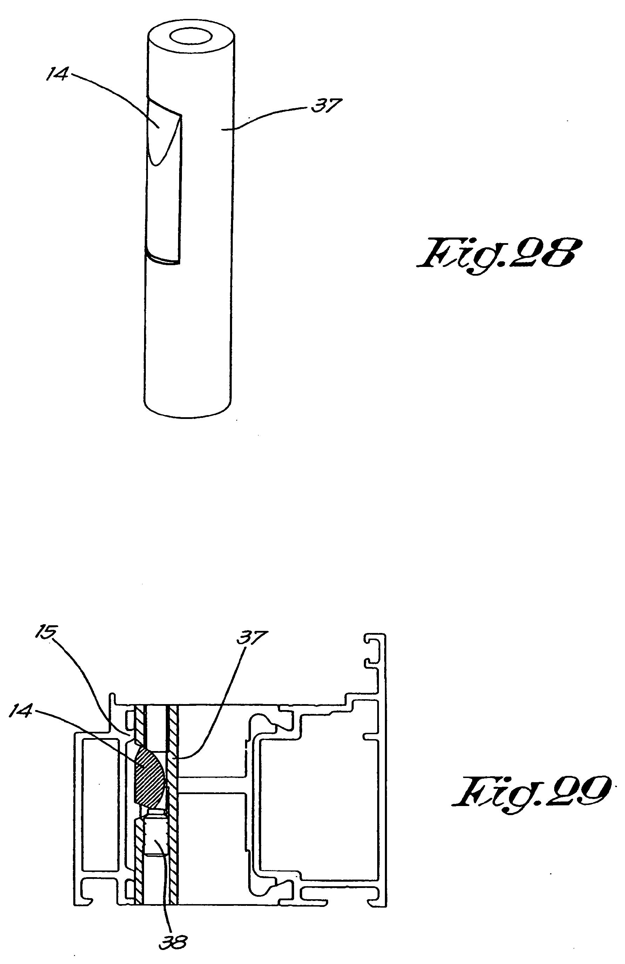

The embodiment as represented in figures 29 to 31 which does not form part of the invention differs from the above-described embodiment as represented in figures 26 to 28 in that the cam 14 is tilted and tightened against the rib 15 through the action of a headless bolt 38 via the opening on the side opposite the one to which the fixing plates 4 of the hinge 3 are fixed to the door frame profile 1.

Also, the bush 37 with internal thread reaches from the concealed wall of the frame profile 1 up to the opposite wall which is designed to lean against the reveal of the construction in which the door profile is to be provided.

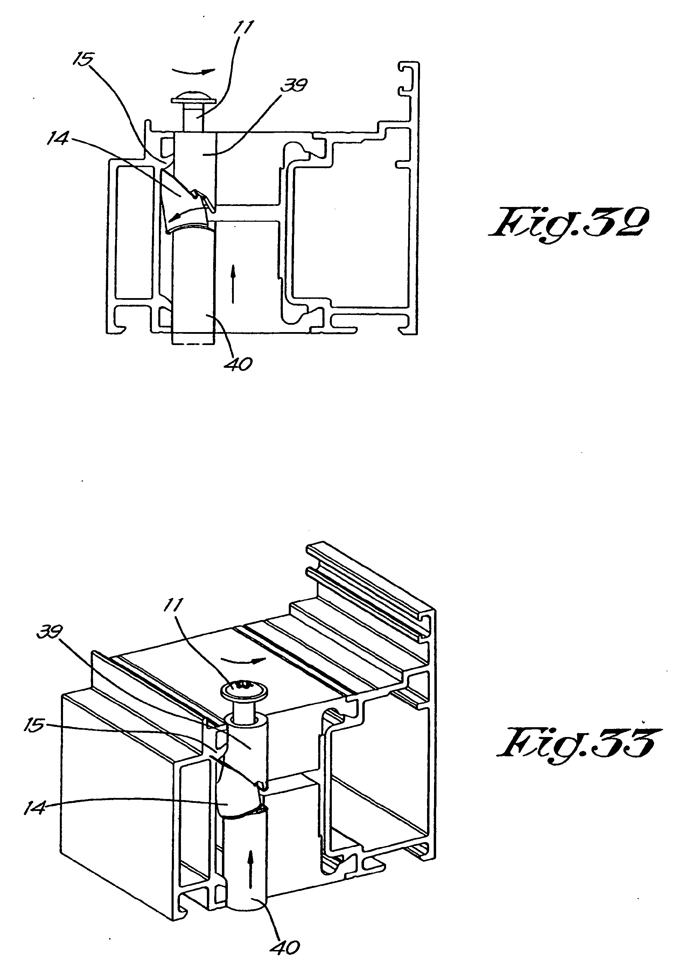

A special variant embodiment which does not form part of the invention is represented in figures 32 and 33, and it provides for a bolt 11, a first bush 39 and a tilting cam 14 arranged between said first bush 39 and a second bush 40 with internal thread.

The first bush 39 and the cam 14 have appropriate bevels on their adjacent faces, such that when the bolt 11 is screwed down, as a result of which the second bush 40 is tightened, the cam 14 is tilted and/or moved in the direction of and up against the rib 15.

The opening 19 must extend at least up to the wall opposite the one to which the fixing plates 4 of the hinge 3 are fixed since, during the mounting, the second bush 40 extends partly through said wall in the given embodiment.

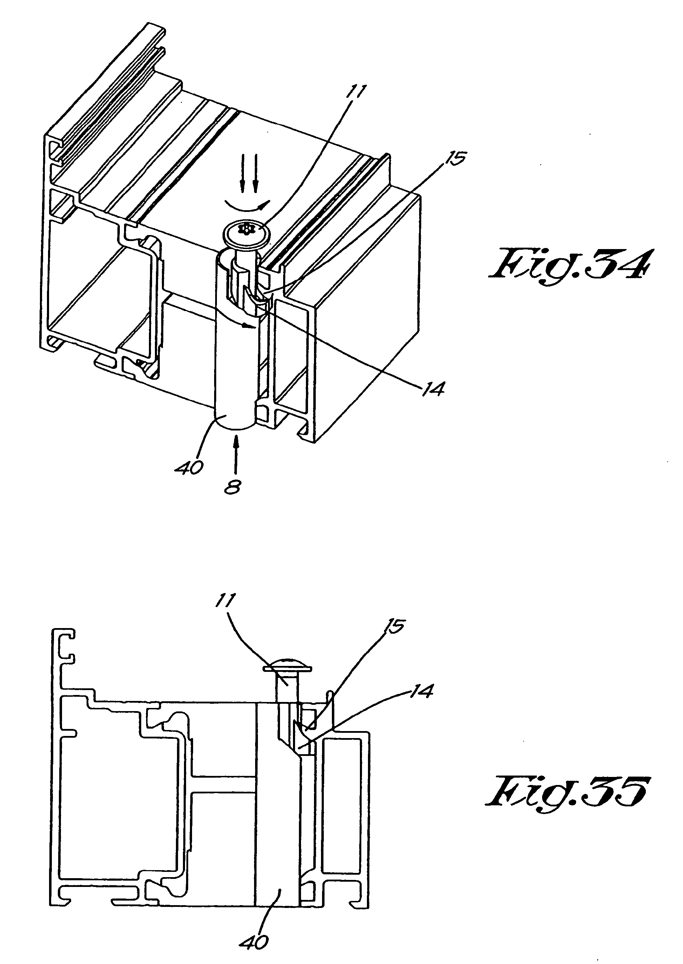

In the embodiment as represented in figures 34 to 36 which does not form part of the invention, the clamping system 8 according to the invention consists of a cam 14 and a sleeve 40 with internal thread.

The cam 14 and the bush 40 have appropriate bevels on their adjacent faces, such that when the bolt 11 is screwed down, as a result of which the bush 40 is tightened, the cam 14 is moved laterally and upward in the direction of and up against the rib 15.

The cam 14 may be formed such that, seen from the direction from where the cam is introduced in the opening, it is at least partly moved behind a part of the rib, such that when the cam is seized or tightened against and behind the rib, a firm base is obtained in the aforesaid feeding direction as well.

If necessary, a clamping system (8) according to the invention can be disassembled and possibly be used to fix a hinge or the like to another profile. In other words, a claming system (8) according to the invention can be reused.

It is clear that the method and the clamping system for fixing hinges and other metal work to window or door profiles can also be applied to another reinforced zone which is not a rib, or to a profile wall which is already made sufficiently robust as such in relation to the expected load. For smaller doors or windows for example, inducing a smaller load on the hinges, or when using steel profiles or profiles with a larger wall thickness, the clamping system according to the invention can also be applied without any co-operation with a rib or another locally reinforced zone.

The present invention is by no means restricted to the embodiments described by way of example and represented in the accompanying drawings; on the contrary, such a clamping system for fixing hinges to window or door profiles can be made in all sorts of shapes and dimensions according to the invention while still remaining within the scope of the invention as defined by the claims.

## Claims

1. Clamping system for fixing hinges and other metal work to window or door profiles, in particular to hollow window profiles provided with at least one inner rib (15) or another reinforced zone inside the profile (1,2), whereby the clamping system (8) comprises at least a bolt (11) and a cam (14) which can be at least partly introduced through an opening (19) , for example a bore hole, in said hollow profile (1,2) which cam (14) is made such that it can be moved and/or tilted while the clamping system (8) is being introduced, or while the bolt (11) is being screwed down, or in a separate action, crosswise to the feeding direction, up against the aforesaid inner rib (15) or another reinforced zone inside the profile (1,2), whereby the clamping system (8) further comprises a bush which is mainly formed of two parts, namely a half-open bush (9) and a tailpiece (10) which are complementary and together form a fully fledged bush which serves as a elug B and which is provided with internal thread to work in conjonction with the bolt (11), the cam (14) being provided on the half-open bush (9) **characterised in that** the half-open bush (9) is provided with a lip (16) to manipulate the half-open bush (9) when its major part has been introduced in the opening (19).

2. Clamping system according to claim 1, **characterised in that** the half-open bush (9) is provided with a widened foot (18). and which section, at the height where there is no cam; is adjusted to the size of the opening (19),

3. Clamping system according to any one of claims 1 to 2 included, **characterised in that** the clamping system (8) extends through two opposite walls of the hollow profile (1,2).

4. Clamping system according to any one of claims 1 to 2 included, **characterised in that** the clamping system (8) is situated in a bore hole through one or several strips (7).

5. Clamping system according to any one of claims 1 to 4 included, **characterised in that** the clamping system (8) can be disassembled and can be reused.

6. Method for fixing hinges and other metal work to window or door profiles, whereby the method comprises the steps of providing openings (19) such as bore holes in the profile (1,2), **characterized in that** the method comprises at least partly introducing a clamping system (8) according to any one of claims 1 to 6 through the aforesaid opening (19), and moving and/or tilting at least a part of the clamping system (8), crosswise to the feeding direction, such that this moved and/or tilted part of the clamping system (8) reaches up against at least an inner rib (15) or another reinforced zone inside the profile (1,2).

7. Method according to claim 6, **characterised in that** the clamping system (8) comprises at least a bolt (11) and a cam (14), which are both inserted at least partly through the aforesaid opening (19) in the profile (1,2), after which the cam (14) is moved and/or tilted crosswise to the feeding direction, such that the moved and/or tilted cam (14) reaches up against an inner rib (15) or another reinforced zone inside the profile (1,2).

8. Method according to claim 7, **characterised in that** the cam (14) is moved and/or tilted crosswise to the feeding direction while being introduced in the opening (19).

9. Method according to claim 7, **characterised in that** the cam (14) is moved and/or tilted crosswise to the feeding direction in a separate action.

10. Method according to claim 8, **characterised in that** the cam (14) is moved and/or tilted crosswise to the feeding direction while the bolt (11) is being screwed down.

11. Method according to claim 7, **characterised in that** the cam (14) is clamped against the rib (15) up to which it reaches, by screwing down the bolt (11) in an appropriate manner.

12. Method according to claim 7, **characterised in that** the cam (14) is not only moved and/or tilted up against the rib (15), but whereby the design of the cam (14) is adjusted such to the design of the rib (15) that, seen from the direction from where the cam (14) is introduced in the opening (19), it is at least partly moved behind a part of the rib (15).

13. Method according to claim 7, **characterised in that** the cam (14) is not only moved and/or tilted up against the rib (15), but whereby the design of the rib (15) is such that, seen as of the position of an introduced cam (14) before this cam (14) is moved and/or tilted, it has a concealed part between the rib (15) and the wall of the profile (1,2), and whereby the cam (14) is adjusted such to the design of the rib (15) that the cam (14) is at least partly moved and/or tilted between the rib (15) and the wall of the profile (1,2).

14. Profile for a door or window frame, The profile comprising a clamping system (8) according to claim 1 and which profile (1,2) is provided with an inner rib (15) or another reinforced zone on the inside for such a clamping system (8).

## Patentansprüche

1. Klemmsystem zur Befestigung von Scharnieren und anderem Beschlag an Fenster- oder Türprofilen, insbesondere an hohlen Fensterprofilen, die mit mindestens einer inneren Rippe (15) oder anderen verstärkten Zone innerhalb des Profils (1, 2) versehen sind, wobei das Klemmsystem (8) mindestens einen Bolzen (11) und einen Nocken (14) umfasst, die mindestens teilweise durch eine Öffnung (19), beispielsweise eine Bohrung, in besagtes Hohlprofil (1, 2) eingebracht werden können, welcher Nocken (14) so ausgeführt ist, dass er bewegt und/oder gekippt werden kann, während das Klemmsystem (8) eingebracht wird, oder während der Bolzen (11) festgeschraubt wird, oder in einem getrennten Vorgang, quer zur Einführrichtung, bis gegen die vorgenannte innere Rippe (15) oder andere verstärkte Zone innerhalb des Profils (1, 2), wobei das Klemmsystem (8) weiter eine Hülse umfasst, die im Wesentlichen aus zwei Teilen gebildet ist, nämlich einer halboffenen Hülse (9) und einem Schlussstück (10), die komplementär sind und zusammen eine vollständige Hülse bilden, die als Stopfen dient und deren Querschnitt, auf der Höhe, in der sich kein Nocken befindet, an die Größe der Öffnung (19) angepasst ist, und welche mit Innengewinde versehen ist, um mit dem Bolzen (11) zusammenzuwirken, wobei der Nocken (14) an der halboffenen Hülse (9) vorgesehen ist, **dadurch gekennzeichnet, dass** die halboffene Hülse (9) mit einer Lippe (16) versehen ist, um die halboffene Hülse (9) zu manipulieren, wenn deren größter Teil in die Öffnung (19) eingebracht ist.

2. Klemmsystem nach Anspruch 1, **dadurch gekennzeichnet, dass** die halboffene Hülse (9) mit einem verbreiterten Fuß (18) versehen ist.

3. Klemmsystem nach einem der Ansprüche 1 bis einschließlich 2, **dadurch gekennzeichnet, dass** das Klemmsystem (8) sich durch zwei gegenüberliegende Wände des Hohlprofils (1, 2) erstreckt.

4. Klemmsystem nach einem der Ansprüche 1 bis einschließlich 2, **dadurch gekennzeichnet, dass** das Klemmsystem (8) sich in einer Bohrung durch eine oder mehrere Latten (7) erstreckt.

5. Klemmsystem nach einem der Ansprüche 1 bis einschließlich 4, **dadurch gekennzeichnet, dass** das Klemmsystem (8) auseinandergenommen und wiederverwendet werden kann.

6. Verfahren zur Befestigung von Scharnieren und anderem Beschlag an Fenster- oder Türprofilen, wobei das Verfahren die Schritte des Vorsehens von Öffnungen (19), wie etwa Bohrungen, in dem Profil (1, 2) umfasst, **dadurch gekennzeichnet, dass** das Verfahren das mindestens teilweise Einbringen eines Klemmsystems (8) gemäß einem der Ansprüche 1 bis 6 durch die vorgenannte Öffnung (19) und Bewegen und/oder Kippen mindestens eines Teils des Klemmsystems (8), quer zur Einführrichtung, umfasst, derart, dass dieser bewegte und/oder gekippte Teil des Klemmsystems (8) bis mindestens zu einer inneren Rippe (15) oder anderen verstärkten Zone innerhalb des Profils (1, 2) reicht.

7. Verfahren nach Anspruch 6, **dadurch gekennzeichnet, dass** das Klemmsystem (8) mindestens einen Bolzen (11) und einen Nocken (14) umfasst, die beide mindestens teilweise durch die vorgenannte Öffnung (19) in dem Profil (1, 2) eingebracht werden, wonach der Nocken (14) quer zur Einführrichtung bewegt und/oder gekippt wird, sodass der bewegte und/oder gekippte Nocken (14) bis zu einer inneren Rippe (15) oder anderen verstärkten Zone innerhalb des Profils (1, 2) reicht.

8. Verfahren nach Anspruch 7, **dadurch gekennzeichnet, dass** der Nocken (14) quer zur Einführrichtung bewegt und/oder gekippt wird, während er in die Öffnung (19) eingebracht wird.

9. Verfahren nach Anspruch 7, **dadurch gekennzeichnet, dass** der Nocken (14) in einem getrennten Vorgang quer zur Einführrichtung bewegt und/oder gekippt wird.

10. Verfahren nach Anspruch 8, **dadurch gekennzeichnet, dass** der Nocken (14) quer zur Einführrichtung bewegt und/oder gekippt wird, während der Bolzen (11) festgeschraubt wird.

11. Verfahren nach Anspruch 7, **dadurch gekennzeichnet, dass** der Nocken (14) gegen die Rippe (15) geklemmt wird, bis an welche er reicht, indem der Bolzen (11) auf geeignete Weise festgeschraubt wird.

12. Verfahren nach Anspruch 7, **dadurch gekennzeichnet, dass** der Nocken (14) nicht nur bis gegen die Rippe (15) bewegt und/oder gekippt wird, sondern wobei die Formgebung des Nockens (14) so an die Formgebung der Rippe (15) angepasst ist, dass er, gesehen aus der Richtung, aus der der Nocken (14) in die Öffnung (19) eingebracht wird, mindestens teilweise hinter einen Teil der Rippe (15) bewegt wird.

13. Verfahren nach Anspruch 7, **dadurch gekennzeichnet, dass** der Nocken (14) nicht nur bis gegen die Rippe (15) bewegt und/oder gekippt wird, sondern wobei die Formgebung der Rippe (15) derart ist, dass, gesehen ab der Position eines eingebrachten Nockens (14) bevor dieser Nocken (14) bewegt und/oder gekippt wird, er einen verborgenen Teil zwischen der Rippe (15) und der Wand des Profils (1, 2) aufweist, und wobei der Nocken (14) so an die Formgebung der Rippe (15) angepasst ist, dass der Nocken (14) mindestens teilweise zwischen die Rippe (15) und die Wand des Profils (1, 2) bewegt und/oder gekippt wird.

14. Profil für einen Tür- oder Fensterrahmen, wobei das Profil ein Klemmsystem (8) nach Anspruch 1 umfasst und welches Profil (1, 2) an der Innenseite mit einer inneren Rippe (15) oder anderen verstärkten Zone für ein solches Klemmsystem (8) versehen ist.

## Revendications

1. Système de serrage pour fixer des charnières et d'autres pièces métalliques à des profilés de fenêtres ou de portes, en particulier à des profilés de fenêtres creux munis d'au moins une nervure interne (15) ou d'une autre zone renforcée à l'intérieur du profilé (1, 2), le système de serrage (8) comprenant au moins un boulon (11) et une came (14) qui peut s'introduire au moins en partie dans une ouverture (19) par exemple un trou d'alésage pratiqué dans ledit profilé creux (1, 2), ladite came (14) étant réalisée de telle sorte qu'elle peut se déplacer et/ou basculer lors de l'introduction du système de serrage (8), ou bien lorsque le boulon (11) est vissé ou, dans une action séparée, transversalement par rapport à la direction d'alimentation, jusque contre la nervure interne susmentionnée (15) ou contre une autre zone renforcée à l'intérieur du profilé (1, 2), le système de serrage (8) comprenant en outre un manchon qui est principalement constitué par deux parties, plus précisément un manchon à moitié ouvert (9) et une partie arrière (10) qui sont complémentaires et qui forment ensemble un manchon complet qui fait office de bouchon et la section, à hauteur de laquelle il n'y a pas de came, est réglée à la dimension de l'ouverture (19) et est munie d'un filet de vis interne pour travailler conjointement avec le boulon (11), la came (14) étant prévue sur le manchon à moitié ouvert (9), **caractérisé en ce que** le manchon à moitié ouvert (9) est muni d'une lèvre (16) pour la manipulation du manchon à moitié ouvert (9) lorsque sa majeure partie a été introduite dans l'ouverture (19).

2. Système de serrage selon la revendication 1, **caractérisé en ce que** le manchon à moitié ouvert (9) est muni d'un pied élargi (18).

3. Système de serrage selon l'une quelconque des revendications 1 à 2 incluse, **caractérisé en ce que** le système de serrage (8) s'étend à travers deux parois opposées du profilé creux (1, 2).

4. Système de serrage selon l'une quelconque des revendications 1 à 2 incluse, **caractérisé en ce que** le système de serrage (8) est situé dans un trou d'alésage pratiqué à travers une ou plusieurs bandes (7).

5. Système de serrage selon l'une quelconque des revendications 1 à 4 incluse, **caractérisé en ce que** le système de serrage (8) peut être démonté et peut être réutilisé.

6. Procédé de fixation d'articulation ou d'une autre pièce métallique à des profilés de fenêtres ou de portes, le procédé comprenant les étapes consistant à procurer des ouvertures (19) tels que des trous d'alésage dans le profilé (1, 2), **caractérisé en ce que** le procédé comprend au moins le fait d'introduire en partie un système de serrage (8) selon l'une quelconque des revendications 1 à 6 à travers l'ouverture (19) susmentionnée, et le fait de déplacer et/ou de basculer au moins une partie du système de serrage (8), en direction transversale par rapport à la direction d'alimentation, de telle sorte que cette partie ayant fait l'objet d'un déplacement et/ou d'un basculement, du système de serrage (8), parvient contre au moins une nervure interne (15) ou contre une autre zone renforcée à l'intérieur du profilé (1, 2).

7. Procédé selon la revendication 6, **caractérisé en ce que** le système de serrage (8) comprend au moins un boulon (11) et une came (14) que l'on insère tous deux au moins en partie à travers l'ouverture (19) susmentionnée dans le profilé (1, 2) ; après quoi on soumet la came (14) à un déplacement et/ou à un basculement transversalement par rapport à la direction d'alimentation, de telle sorte que la cama ayant fait l'objet d'un déplacement et/ou d'un basculement (14) parvient contre une nervure interne (15) ou contre une autre zone renforcée à l'intérieur du profilé (1, 2).

8. Procédé selon la revendication 7, **caractérisé en ce qu'**on soumet la came (14) à un déplacement et/ou à un basculement transversalement par rapport à la direction d'alimentation lors de son introduction dans l'ouverture (19).

9. Procédé selon la revendication 7, **caractérisé en ce qu'**on soumet la came (14) à un déplacement et/ou à un basculement transversalement par rapport à la direction d'alimentation dans une action séparée.

10. Procédé selon la revendication 8, **caractérisé en ce qu'**on soumet la came (14) à un déplacement et/ou à un basculement transversalement par rapport à la direction d'alimentation lors du vissage du boulon (11).

11. Procédé selon la revendication 7, **caractérisé en ce que** la came (14) est serrée contre la nervure (15) qu'elle rejoint, en vissant le boulon (11) d'une manière appropriée.

12. Procédé selon la revendication 7, **caractérisé en ce que**, non seulement la came (14) est soumise à un déplacement et/ou à un basculement jusque contre la nervure (15), mais également le profil de la came (14) est réglé en fonction du profil de la nervure (15) de telle sorte que, lorsqu'on regarde dans la direction dans laquelle on introduit la came (14) dans l'ouverture (19), elle est déplacée au moins en partie derrière une partie de la nervure (15).

13. Procédé selon la revendication 7, **caractérisé en ce que**, non seulement la came (14) est soumise à un déplacement et/ou à un basculement jusque contre la nervure (15), mais également le profil de la nervure (15) est tel que, lorsqu'on prend en compte la position de la came introduite (14) avant de soumettre ladite came (14) à un déplacement et/ou à un basculement, elle possède une partie cachée entre la nervure (15) et la paroi du profilé (1, 2), et la came (14) est réglée en fonction du profil de la nervure (15) de telle sorte que la came (1)4 est soumise au moins en partie à un déplacement et/ou à un basculement entre la nervure (15) et la paroi du profilé (1, 2).

14. Profilé pour un encadrement de porte ou de fenêtre, le profilé comprenant un système de serrage (8) selon la revendication 1 et le profilé (1, 2) étant muni d'une nervure interne (15) ou d'une autre zone renforcée interne pour un tel système de serrage (8).
